# EUROPÄISCHE PATENTSCHRIFT

(11) **EP 2 272 249 B1**
(45) Veröffentlichungstag und Bekanntmachung des Hinweises auf die Patenterteilung: **08.08.2018**
(21) Anmeldenummer: 09741733.1
(22) Anmeldetag: 27.04.2009
(51) Int. Cl.: H04N 5/235

(54) **VERFAHREN ZUR BELICHTUNGSSTEUERUNG FÜR EINE KAMERA IN EINEM KRAFTFAHRZEUG**
METHOD FOR CONTROLLING THE EXPOSURE OF A CAMERA IN A MOTOR VEHICLE
PROCÉDÉ DE COMMANDE DE L'EXPOSITION POUR UN APPAREIL DE PRISE DE VUES DANS UN VÉHICULE AUTOMOBILE

(30) Priorität: 03.05.2008 DE 102008022064
(43) Veröffentlichungstag der Anmeldung: 12.01.2011
(73) Patentinhaber: ADC Automotive Distance Control Systems GmbH, 88131 Lindau (DE)
(72) Erfinder: KRÖKEL, Dieter, 88097 Eriskirch (DE)
(86) Internationale Anmeldenummer: PCT/DE2009/000579
(87) Internationale Veröffentlichungsnummer: WO 2009/135460

(56) Entgegenhaltungen:
- EP-A- 1 883 242
- US-A1- 2004 227 814

## Beschreibung

Die Erfindung betrifft ein Verfahren zur Belichtungssteuerung für eine Kamera in einem Kraftfahrzeug und findet z. B. Anwendung in Fahrzeugen, die mit Fahrerassistenzfunktionen ausgestattet sind.
Ein optimal ausgeleuchtetes Bild ist die Voraussetzung für die sichere und fehlerfreie Erfassung von Objekten und von Bedeutung für die Zuverlässigkeit eines Fahrerassistenzsystems.

Die US 2004/0227814 A1 zeigt ein Doppelbelichtungsverfahren für ein Kamerasystem eines Fahrzeugs, das erste und zweite Bilder mit unterschiedlichen Belichtungszeiten synthetisiert.

Die DE 102006028624 A1 zeigt einen belichtungsadaptiven Bildsensor mit einer Steuervorrichtung, die eine effektiv verkürzte Integrationszeit ermöglicht.

Die EP 1 883 242 A1 zeigt ein Verfahren zur Belichtungssteuerung sowie eine Bildverarbeitung für Fahrzeuge mit den Merkmalen des Oberbegriffs des Anspruchs 1. Für zwei Fahrerassistenzfunktionen, nämlich eine Fahrspurmarkierungserkennung und eine Erkennung von 3D-Objekten auf der Fahrbahn, werden Bilder mit unterschiedlicher Belichtungszeit aufgenommen.

Die Synthese von zwei zu unterschiedlichen Zeiten aufgenommen Bildern führt zu Verwischungen von sich schnell in ihrer Position verändernden Objekten.
Eine verkürzte Integrationszeit kann bei nicht ausreichender Beleuchtung zu kontrastarmen und damit nicht mehr sicher zu detektierenden Objekten oder Markierungen führen.

Es ist deshalb die Aufgabe der hier vorgestellten Erfindung eine Anwendung eines Verfahrens zur Belichtung einer Kamera anzugeben, mit dem Objekte zuverlässig erkannt werden können.

Diese Aufgabe ist erfindungsgemäß gelöst durch eine Vorrichtung und eine Anwendung eines Verfahrens gemäß den unabhängigen Patentansprüchen. Vorteilhafte Weiterbildungen sind den Unteransprüchen zu entnehmen.

Es wird eine Anwendung eines Verfahrens zur Belichtungssteuerung für ein Kamerasystem in einem Kraftfahrzeug angegeben, das mit zumindest zwei Fahrerassistenzfunktionen ausgestattet ist. Mit dem Kamerasystem wird eine Bilderfolge von der Fahrzeugumgebung mit einer optimalen Belichtungszeit aufgenommen. Die optimale Belichtungszeit ist in Abhängigkeit von den Umgebungshelligkeit bzw. der Helligkeit einzelner Objekte im Bild vorgegeben. Zusätzlich hängt die Belichtungszeit von einer vorgesehenen Applikation, z. B. einer Fahrerassistenzfunktion ab.
Zudem wird ein Zwischenbild mit einer kurzen Belichtungszeit, d.h. einer Belichtungszeit kürzer als die optimale Belichtungszeit, aufgenommen, falls die optimale Belichtungszeit länger als ein vorgegebener Schwellwert ist.
Es werden zumindest zwei Fahrerassistenzfunktionen basierend auf den Bilddaten des Kamerasystems ausgeführt, wobei für ein erstes Fahrerassistenzsystem die Bilddaten aufgenommen mit optimaler Belichtungszeit verwendet werden und für ein zweites Fahrerassistenzsystem die Bilddaten aufgenommen mit kurzer Belichtungszeit verwendet werden.

In einer positiven Ausgestaltung der Erfindung ist der vorgegebene Schwellwert abhängig von der Geschwindigkeit des Kraftfahrzeugs. Insbesondere wird bei hohen Geschwindigkeiten ein kleiner Schwellwert gewählt. Der Zusammenhang zwischen vorgegebenen Schwellwert und der Geschwindigkeit verhält sich z.B. umgekehrt proportional oder folgt einer Stufenfunktion.

In einer vorteilhaften Ausgestaltung der Erfindung wird alternierend ein Bild mit kurzer und mit langer Belichtungszeit aufgenommen.

In einer vorteilhaften Ausgestaltung der Erfindung wird das Verfahren in einem Kamerasystem zur Verkehrszeichenerkennung und ggf. für eine weitere Fahrerassistenzfunktion eingesetzt.

Nachfolgend wird die Erfindung anhand von Ausführungsbeispielen mit den Fahrerassistenzfunktionen A, B und C und Figuren erläutert. Die Fahrerassistenzfunktion A ist z. B. eine Spurerkennung, B ist z.B. eine Lichtsteuerung und C ist z. B. eine Verkehrzeichenerkennung.
Fig. 1: Zeitdiagramm bei konstanter Bildrate und einer Belichtungszeit kleiner als ein vorgegebener Schwellwert z. B. kleiner als 5ms
Fig. 2: Zeitdiagramm mit einer alternierenden Folge von lang und kurz belichteten Bildern
Fig. 3: Zeitdiagramm für eine Belichtungszeit kleiner als ein vorgegebener Schwellwert und vereinfachter Synchronisation
Fig. 4: Zeitdiagramm mit einer alternierenden Folge von lang und kurz belichteten Bildern und vereinfachter Synchronisation

Tagsüber stellen Applikationen wie Spurerkennung (SpE) und Verkehrszeichenerkennung (VZE) ähnliche Anforderungen an die Belichtungssteuerung: moderate Anforderungen an den Dynamikbereich des Bildaufnehmers bei Sonne und Schlagschatten und hohe Anforderungen an den Dynamikbereich z. B. bei Tunnelein- und -ausfahrten bei Aufrechterhaltung eines möglichst hohen Kontrastes für die Spurfindung.

Die Nacht stellt das andere Extrem für die Belichtungssteuerung dar. Die Spurfindung benötigt eine möglichst lange Belichtungszeit. Der Dynamikbereich muss sehr hoch sein, damit entgegenkommende Scheinwerfer nicht zu unerwünschten Blendungen führen. Für nachts laufende Applikationen wie Fernlichtassistenz (FLA) muss die Belichtung so eingestellt sein, dass außer entgegenkommende Fahrzeuge keine Objekte den Bildaufnehmer in die Sättigung bringen. Andererseits darf für die Verkehrszeichenerkennung die Belichtungszeit bei hohen Geschwindigkeiten nicht zu groß werden, da sonst aufgrund des "motion-blurs" die Aussage des Verkehrszeichens z.B. eine Geschwindigkeitsbegrenzung nicht mehr eindeutig zu erkennen sind.
Richtwert für die Belichtungszeit zur Vermeidung des motion-blurs ist 5 ms bei 200 km/h. Die sich entgegenstehenden Anforderungen für die Spurerkennung und die Verkehrszeichenerkennung bei Dämmerung und bei Nacht erfordern eine Lösung, die im Folgenden erläutert wird.

Als erstes Ausführungsbeispiel wird ein Verfahren beschrieben, bei dem oberhalb einer vorgegebenen Geschwindigkeit des Kraftfahrzeugs und einer vorgegebenen Belichtungszeit für die Verkehrszeichenkennung ein zweites, kurz belichtetes Bild aufgenommen wird.

Die Belichtung für die Verkehrszeichen bei Nacht kann verkürzt werden, da die Verkehrsschilder das Scheinwerferlicht zumindest teilweise reflektieren und somit eine wesentlich höhere Lichtmenge der Scheinwerfer zurückwerfen als z.B. der Straßenasphalt. Die Verkehrszeichen sind auch bei kürzerer Belichtungszeit noch mit ausreichendem Kontrast für die Kamera sichtbar. Die Bildwiederholrate ist in der Regel für alle Applikationen konstant z.B. 25 Hz.

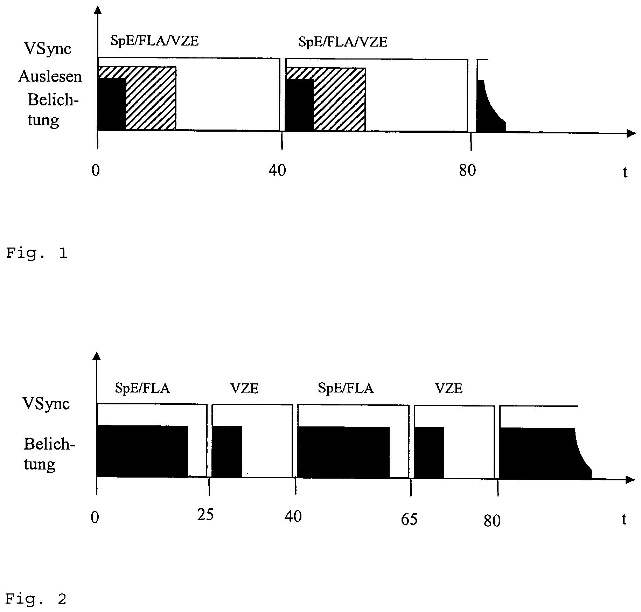

In Abb. 1 ist ein Zeitdiagramm bei konstanter Bildrate und einer Belichtungszeit kleiner als ein vorgegebener Schwellwert z. B. kleiner als 5ms dargestellt. Die schraffierte Fläche kennzeichnet die Auslesezeit, die parallel zur Belichtung erfolgt. In der Auslesezeit wird das im Zyklus zuvor aufgenommene Bild ausgelesen.

Es ist nun vorgesehen, dass, wenn eine Belichtungszeit größer als ein vorgegebener Schwellwert z. B. größer als 5 ms erforderlich wird, innerhalb des zur Verfügung stehenden Zeitfensters (40 ms/Bild bei einer Bildwiederholrate von 25 frames/sec) ein zweites, kurz belichtetes Bild mit einer Belichtungszeit kleiner als der vorgegebene Schwellwert z. B. 5 ms aufgenommen werden kann, damit zusätzlich ein nicht durch motion-blur verzerrtes Bild erzeugt wird. Die Berücksichtigung dieses Ansatzes setzt voraus, dass die Auslesezeit des Bildes deutlich kürzer ist, als das zur Verfügung stehenden Zeitfenster (z.B. 15 ms bei 25 frames/sec) ist. Dann kann z.B. der erste Frame auf 25ms verkürzt werden und ein zweiter Frame der Länge 15ms eingefügt werden.
Die Bildrate wird also für Belichtungszeiten größer als ein vorgegebener Schwellwert (z. B. 5 ms) verdoppelt, wobei alternierend Bilder für die Spurerkennung bzw. Fernlichtassistenz und Verkehrszeichenerkennung aufgenommen werden. Figur 2 verdeutlicht den zeitlichen Ablauf des Verfahrens bei einer Belichtungszeit von beispielsweise 20 ms für das 1. Frame und 5 ms für das 2. Frame.

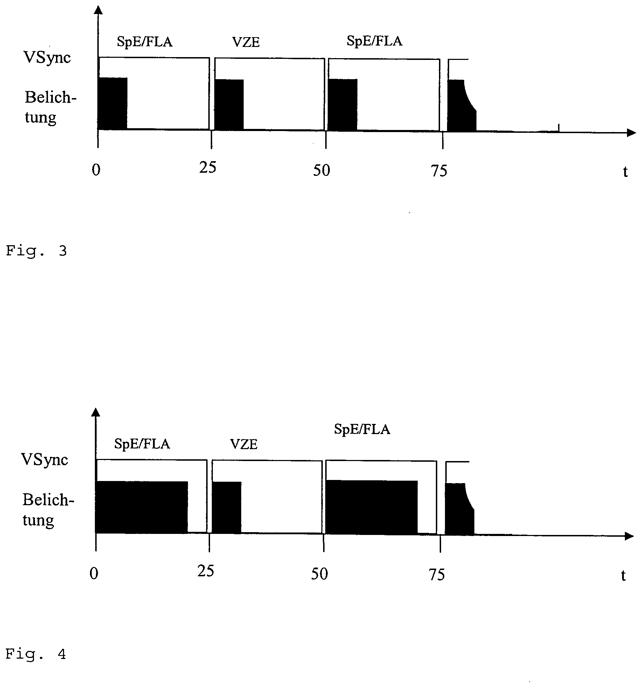

In einem zweiten Ausführungsbeispiel wird ein Verfahren mit einer vereinfachten Synchronisierungsanforderung an Taktgebung und Bildauswertung vorgestellt. Beide Frames werden gleich lang gewählt. Ggf. ist eine verlängerte Taktrate in Abhängigkeit von der jeweiligen Applikation erforderlich. In Figur 3 ist der zeitliche Ablauf des Verfahrens für den Fall aufgetragen, dass die Belichtungszeit kürzer als ein vorgegebener Schwellwert ist. Ist die Belichtungszeit kürzer als 5ms, kann die Belichtungssteuerung für beide Frames gleich erfolgen. Wird die Umgebung dunkler und die erforderliche Belichtungszeit größer, wird jetzt die Belichtungszeit für den VZE-Frame kurz (z.B. 5 ms) gehalten. Dies ist in Figur 4 dargestellt. Die kurze Belichtungszeit kann in Abhängigkeit von der Geschwindigkeit des Fahrzeugs bestimmt werden. Damit kann für kleine Geschwindigkeiten die Belichtungszeit verlängert werden, um so ein kontrastreicheres Bild ohne motion blur zu erzielen (wie in Fig. 4 dargestellt auf maximal 25 ms). Der Zusammenhang zwischen der Belichtungszeit für das kurz belichtete Bild und der Geschwindigkeit verhält sich z.B. umgekehrt proportional oder folgt einer Stufenfunktion. Alternativ kann eine fest vorgegebene kurze Belichtungszeit von z.B. 5 ms vorgesehen sein.

## Patentansprüche

1. Anwendung eines Verfahrens zur Belichtungssteuerung für ein Kamerasystem in einem Kraftfahrzeug, das mit zumindest zwei Fahrerassistenzfunktionen ausgestattet ist,
wobei mit einem Kamerasystem eine Bilderfolge von der Fahrzeugumgebung mit einer optimalen Belichtungszeit aufgenommen wird und die optimale Belichtungszeit in Abhängigkeit von der Umgebungshelligkeit und/oder der Helligkeit einzelner Objekte im Bild und in Abhängigkeit von einer ersten Fahrerassistenzfunktion vorgegeben ist und zumindest zwei Fahrerassistenzfunktionen basierend auf den Bilddaten des Kamerasystems ausgeführt werden, wobei für die erste Fahrerassistenzfunktion die Bilddaten aufgenommen mit optimaler Belichtungszeit verwendet werden,
**dadurch gekennzeichnet, dass**
zumindest ein Zwischenbild mit einer kurzen vorgegebenen Belichtungszeit, d.h. einer Belichtungszeit kürzer als die optimale Belichtungszeit, aufgenommen wird, wenn die optimale Belichtungszeit länger als ein vorgegebener Schwellwert ist, wobei der Schwellwert derart vorgegeben ist, dass motion-blur im Zwischenbild vermieden wird, und für die zweite Fahrerassistenzfunktion die Bilddaten aufgenommen mit kurzer Belichtungszeit verwendet werden.

2. Anwendung eines Verfahrens nach Anspruch 1
**dadurch gekennzeichnet, dass**
der vorgegebene Schwellwert von der Geschwindigkeit des Kraftfahrzeugs abhängt.

3. Anwendung eines Verfahrens nach Anspruch 1,
**dadurch gekennzeichnet, dass**
alternierend ein Bild mit kurzer und mit langer Belichtungszeit aufgenommen wird.

4. Anwendung eines Verfahrens nach einem der vorherigen Ansprüche,
**dadurch gekennzeichnet, dass**
das erste Fahrerassistenzsystem eine Spurerkennung (SpE) oder eine Fernlichtassistenz (FLA) ist.

5. Anwendung eines Verfahrens nach einem der vorherigen Ansprüche,
**dadurch gekennzeichnet, dass**
das zweite Fahrerassistenzsystem eine Verkehrszeichenerkennung (VZE) ist.

6. Anwendung eines Verfahrens nach Anspruch 5,
**dadurch gekennzeichnet, dass**
bei Nacht für die Verkehrszeichenerkennung (VZE) die Bilddaten aufgenommen mit kurzer Belichtungszeit verwendet werden

7. Anwendung eines Verfahrens nach einem der vorherigen Ansprüche,
**dadurch gekennzeichnet, dass**
alternierend Bilder für die Spurerkennung (SpE) oder Fernlichtassistenz (FLA) und Verkehrszeichenerkennung(VZE) aufgenommen werden.

8. Anwendung eines Verfahrens nach einem der vorherigen Ansprüche,
**dadurch gekennzeichnet, dass**
die Bildwiederholrate für alle Fahrerassistenzsystem konstant ist.

9. Anwendung eines Verfahrens nach einem der vorherigen Ansprüche,
**dadurch gekennzeichnet, dass**
sich der Zusammenhang zwischen der Belichtungszeit für das kurz belichtete Bild und der Geschwindigkeit des Kraftfahrzeugs umgekehrt proportional verhält.

10. Kamerasystem in einem Kraftfahrzeug umfassend Mittel, die dazu ausgebildet sind, eine Anwendung eines Verfahrens nach einem der vorherigen Ansprüche durchzuführen.

11. Kraftfahrzeug mit einem Kamerasystem nach Anspruch 10.

## Claims

1. Application of a method for controlling the exposure of a camera system in a motor vehicle which is equipped with at least two driver assistance functions, wherein a sequence of images of the vehicle surroundings is taken with an optimal exposure time with a camera system and the optimal exposure time is predefined as a function of the ambient brightness and/or the brightness of individual objects in the image and as a function of a first driver assistance function, and at least two driver assistance functions are executed based on the image data of the camera system, wherein the image data taken with the optimal exposure time are used for the first driver assistance function,
**characterised in that**
at least one intermediate image with a short, predefined exposure time, i.e. an exposure time shorter than the optimal exposure time, is taken when the optimal exposure time is longer than a predefined threshold, wherein the threshold is predefined in such a manner that motion blur in the intermediate image is avoided, and the image data taken with a short exposure time are used for the second driver assistance function.

2. The application of a method according to Claim 1,
**characterised in that**
the predefined threshold depends on the speed of the motor vehicle.

3. The application of a method according to Claim 1,
**characterised in that**
an image is alternately taken with a short and with a long exposure time.

4. The application of a method according to any one of the preceding claims,
**characterised in that**
the first driver assistance system is a lane recognition (SpE) system or a high beam assistant (FLA).

5. The application of a method according to any one of the preceding claims,
**characterised in that**
the second driver assistance system is a traffic sign recognition (VZE) system.

6. The application of a method according to Claim 5,
**characterised in that**
the image data taken with a short exposure time are used at night for traffic sign recognition (VZE).

7. The application of a method according to any one of the preceding claims,
**characterised in that**
images are taken alternately for lane recognition (SpE) or high beam assistant (FLA) and traffic sign recognition (VZE).

8. The application of a method according to any one of the preceding claims,
**characterised in that**
the refresh rate is constant for all of the driver assistance systems.

9. The application of a method according to any one of the preceding claims,
**characterised in that**
the relationship between the exposure time for the image exposed for a short time and the speed of the motor vehicle is inversely proportional.

10. A camera system in a motor vehicle,
comprising means which are configured to carry out an application of a method according to any one of the preceding claims.

11. A motor vehicle having a camera system according to Claim 10.

## Revendications

1. Utilisation d'un procédé pour la commande d'exposition pour un système de caméra dans un véhicule automobile, lequel est muni d'au moins deux fonctions d'aide à la conduite, une séquence d'images de l'environnement du véhicule étant enregistrée avec un temps d'exposition optimal avec un système de caméra et le temps d'exposition optimal étant spécifié en fonction de la luminosité de l'environnement et/ou de la luminosité d'objets individuels dans l'image et en fonction d'une première fonction d'aide à la conduite et au moins deux fonctions d'aide à la conduite étant exécutées basé sur les données d'images du système de caméra, les données d'images enregistrées avec temps d'exposition optimal étant utilisées pour la première fonction d'aide à la conduite,
**caractérisée en ce qu'**
au moins une image intermédiaire est enregistrée avec un temps d'exposition court spécifié, c'est-à-dire un temps d'exposition plus court que le temps d'exposition optimal, lorsque le temps d'exposition optimal est plus long qu'une valeur seuil spécifiée, la valeur seuil étant spécifiée de telle sorte que le flou dû au mouvement dans l'image intermédiaire est évité et que les données d'images enregistrées avec temps d'exposition court sont utilisées pour la deuxième fonction d'aide à la conduite.

2. Utilisation d'un procédé selon la revendication 1,
**caractérisée en ce que**
la valeur seuil spécifiée est fonction de la vitesse du véhicule automobile.

3. Utilisation d'un procédé selon la revendication 1,
**caractérisée en ce que**
des images avec temps d'exposition court et avec temps d'exposition long sont enregistrées en alternance.

4. Utilisation d'un procédé selon l'une quelconque des revendications précédentes,
**caractérisée en ce que**
le premier système d'aide à la conduite est une détection de voie (SpE) ou une assistance de feux de route (FLA).

5. Utilisation d'un procédé selon l'une quelconque des revendications précédentes,
**caractérisée en ce que**
le deuxième système d'aide à la conduite est une détection de panneaux de signalisation (VZE).

6. Utilisation d'un procédé selon la revendication 5,
**caractérisée en ce que**
les données d'images enregistrées avec temps d'exposition court sont utilisées la nuit pour la détection de panneaux de signalisation (VZE).

7. Utilisation d'un procédé selon l'une quelconque des revendications précédentes,
**caractérisée en ce que**
des images pour la détection de voie (SpE) ou pour l'assistance de feux de route (FLA) et pour la détection de panneaux de signalisation (VZE) sont enregistrées en alternance.

8. Utilisation d'un procédé selon l'une quelconque des revendications précédentes, **caractérisée en ce que** le taux de répétition d'images est constant pour tous les systèmes d'aide à la conduite.

9. Utilisation d'un procédé selon l'une quelconque des revendications précédentes,
**caractérisée en ce que**
le rapport entre le temps d'exposition pour l'image avec temps d'exposition court et la vitesse du véhicule est inversement proportionnel.

10. Système de caméra dans un véhicule automobile, comprenant des moyens qui sont formés afin d'exécuter une utilisation d'un procédé selon l'une quelconque des revendications précédentes.

11. Véhicule automobile avec un système de caméra selon la revendication 10.
